Europäisches Patentamt

European Patent Office

Office européen des brevets

(11) Publication number: **0 189 413**
**B1**

## (12) EUROPEAN PATENT SPECIFICATION

(45) Date of publication of patent specification: **15.03.89**

(21) Application number: **84904016.7**

(22) Date of filing: **24.10.84**

(86) International application number:
**PCT/SE84/00353**

(87) International publication number:
**WO 85/01997 09.05.85 Gazette 85/11**

(51) Int. Cl.⁴: **F 16 C 29/04**

## (54) SLIDING SHOE ARRANGEMENT.

(30) Priority: **24.10.83 SE 8305828**

(43) Date of publication of application:
**06.08.86 Bulletin 86/32**

(45) Publication of the grant of the patent:
**15.03.89 Bulletin 89/11**

(84) Designated Contracting States:
**DE FR GB SE**

(56) References cited:
**DE-A-1 775 033**
**DE-A-2 239 782**
**DE-A-3 323 536**
**FR-A-1 346 506**
**US-A-3 194 612**

(73) Proprietor: **RUTGERSSON, Göran**
**Ekebacken**
**S-440 30 Marstrand (SE)**

(72) Inventor: **RUTGERSSON, Göran**
**Ekebacken**
**S-440 30 Marstrand (SE)**

(74) Representative: **Hagelberg, Anders Torvald**
**Sverker et al**
**Albihn West AB Stora Nygatan 15**
**S-411 08 Göteborg (SE)**

Courier Press, Leamington Spa, England.

## Description

Technical field:

The invention relates to sliding shoes provided with bearings of the type commonly referred to as linear bearings. This type of bearing is usually used for parts which are to move in a linear path. However, the said type of bearing can also be used for movement along a path which deviates from the straight line and instead is formed by a curve, whereby the curved path is included for such cases where the radius is so large that the common type of bearings for rotational movment would be too clumsy.

Background:

A sliding shoe arrangement of this type is known from DE-A-2 239 782. In sliding shoes of the type to which the invention relates are often used plain bearings, which, however, can give rise to large friction forces. Furthermore, the risk for sticking and jamming is considerable upon loading in an oblique direction if the carrying guides are not very long and do not have good guiding quality, that is, with little play. In many cases, however, the necessary length is not possible to accommodate and will in any case lead to a high cost because of the dimensions of the sliding shoe and the bearing and connecting components being larger than what is necessary to resist the load. A small play in the bearings, on the other hand, demands high precision and will be sensitive to soiling and wear, which all lead to high costs.

Technical problem:

In order to eliminate said disadvantages attempts have been made to create linear bearings for sliding shoes including rollers instead of plain bearing surfaces. The above-mentioned patent represents one such attempt. Such bearings have however proved to be complicated to a high degree in prior known embodiments and they have therefore been reserved for more qualified installations.

The solution:

In the sliding shoe arrangement according to the invention the bearing is provided with a runner which can be moved along a guide, whereby the runner includes projections with surfaces opposite to each other with roller chains provided to extend around the projections and along said surfaces. The roller chain consists of rotatable rollers connected by means of links. On the guide are provided surfaces for the rollers which are opposite to the surfaces of the projections so that the runner can be moved along the guide while the rollers roll while the roller chain moves in a loop around the projections. Preferably each roller of the roller chain consists of two rollers exhibiting a common cylindrical surface with a slot in between them, and between which a shaft, connecting the rollers, extends. On the shaft and in the slot are carried two links, each provided with two holes. One hole surrounds the shaft and the other is positioned at the outside of the roller for connection to the adjacent roller by surrounding with its other hole the last said shaft of the roller, whereby the rollers are provided with outer, free ends.

Advantages:

By means of the invention a sliding shoe is provided with a linear bearing which is provided with rollers, the bearing being simple in construction so it can even be used in sliding shoes in which prior known bearings of this type have been too expensive.

Brief description of drawings:

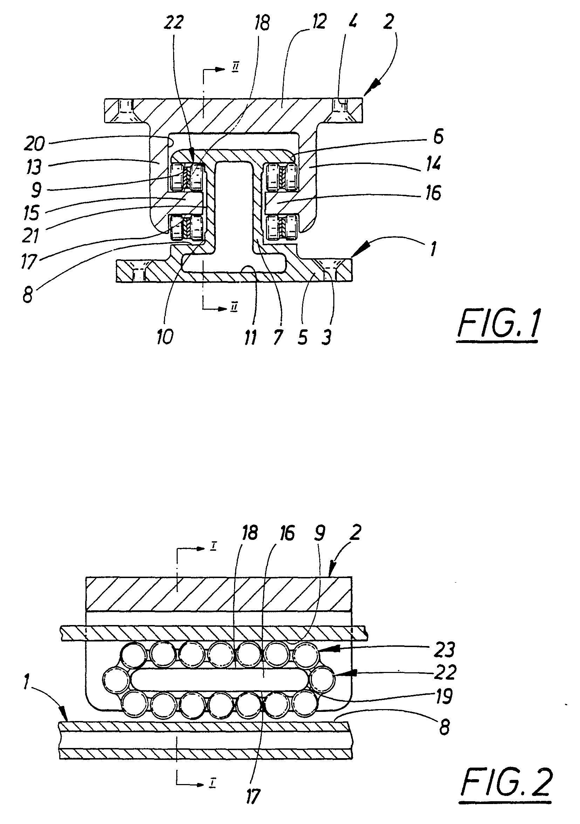

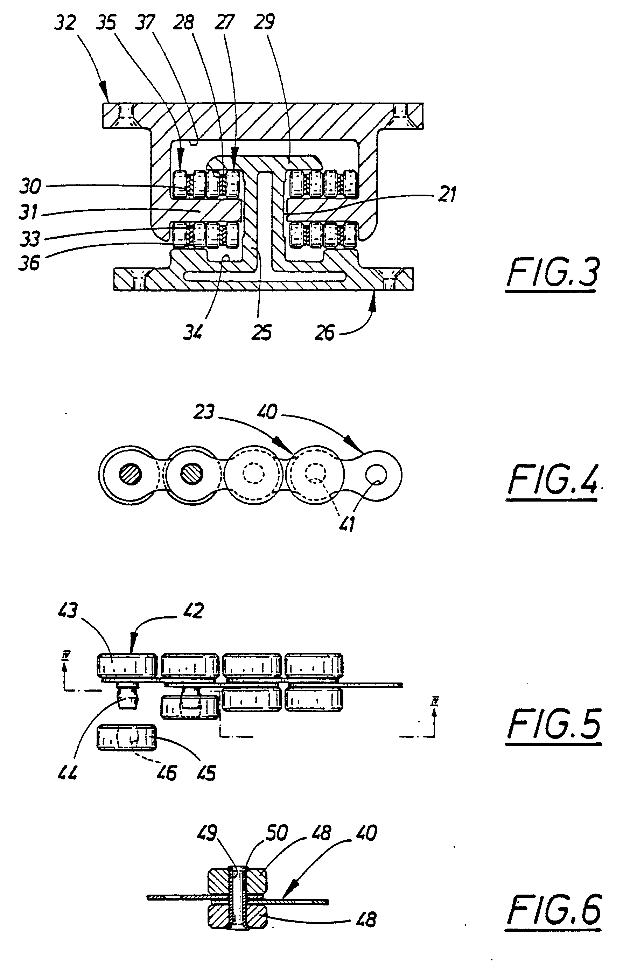

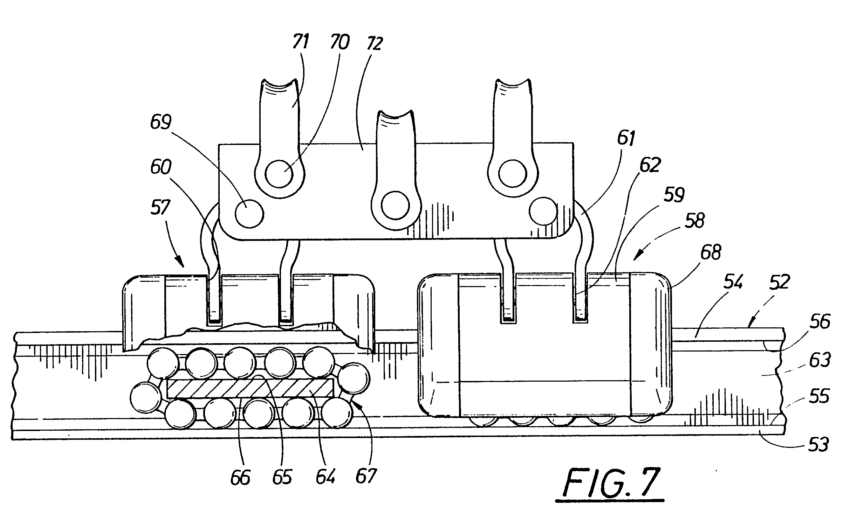

On the accompanying drawings two embodiments are shown of a bearing and a sliding shoe according to the invention. Fig. 1 shows thereby a sectional view of the first embodiment of the bearing along the line I-I in fig. 2; fig. 2 shows a longitudinal sectional view of the same embodiment along the line II-II in fig. 1; fig. 3 shows the second embodiment in a cross sectional view corresponding to the section in fig. I; fig. 4 shows a detail of the bearing partly in section along the line IV-IV in fig. 5; fig. 5 shows a frontal view of the detail according to fig. 4; fig. 6 shows parts of said detail in a second variation of the embodiment; and fig. 7 shows the runner in a partly broken view from the side.

Best mode of carrying out the invention:

The linear bearing exhibits two main details, which are intended to be connected to the parts of the sliding shoe which are to be connected by bearings. These main details are in the following named the guide 1, which has the form of a longitudinal profile, and the runner 2, which has the form of a shorter piece, which is intended to be pushed to and fro along the profile guide 1. Primarily the guide 1 is intended to be attached to a support or similar static part, for example, by means of screws in holes 3, while the runner 2 is intended to be attached to a machine part, for example by means of screws in holes 4, which part is to be moved to and fro along the guide 1. According to fig. 2 the guide 1 is shown as a linear part, but according to what is mentioned in the preamble the guide may instead be provided as an entirely or partly curved part, however, without too sharp bends. The length of the guide will be adapted to the necessary length of the movement, while the length of the runner is determined by the load and the allowable specific pressure.

The guide 1 is "I"-shaped with a lower flange 5 in which said holes 3 for attachment of the guide 1 are situated and an upper flange 6 and a rib 7. The lower flange 5 exhibits a pair of rolling surfaces 8 for rollers on each side of the rib 7 and, in the same way, the upper flange 6 exhibits a pair of surfaces 9. The surface 8 and 9 for rollers are connected to other surfaces 10 of the rib 7. As the rolling surfaces 8, 9 on the respective pair of surfaces should be at a certain distance from each other, the rib 7 is suitably provided, as shown, with an inner space 11 so that its wall thickness will not be too large. The rib 7 is provided with a recess 21 on each side.

The runner 2 is made in the shape of an inverted "U" with a transverse portion 12 which, when the bearing is assembled, is parallel to the lower flange 5 which is provided with the holes 3. The portion 12 exhibits holes 4 for attachment and forms a flange for the attachment of the runner to said machine part. From the portion 12 two ribs 13 and 14 project downwards and, at their outer ends, these exhibit projections 15 and 16. According to Fig. 2 the projection 16 and also the projection 15 exhibit two surfaces 17 and 18 for roller surfaces which join each other via radial end surfaces 19. The surfaces 17, 18 and the radial surfaces 19 are connected to a surface 20 on the respective ribs 13, 14, which extend on both sides beyond the projection 16. From Fig. 2 it is evident how the runner 2 is provided as a short piece while the guide 1 is provided as a long profile, shown in the figure by the ends of the guide 1 being broken in the figure.

Furthermore, the bearing provides two roller chains 22, each forming an endless loop which, with small clearance, extends around each of the projections 15, 16. The roller chains are formed of pairs of rollers 23, which are so dimensioned that the spaces between the pairs of surfaces 8, 17 and 9, 18 will be almost entirely filled. However, there is a certain play so that, when the runner 2 is pulled perpendicularly outwards from the guide 1, a contact is formed between the surfaces 9 and 18 via the rollers 23, while, at the same time, the rollers have certain play in the space between the surface 8, 17 as is shown in Fig, 1. If the runner 2 were to be pressed against the guide 1 the effect will be the reverse, so that the rollers will be squeezed between the surfaces 8, 17 and the play will arise between the surfaces 9, 18. The recess 21 in the rib 7 of the guide 1 will provide clearance for the movement of the roller chain in the transverse direction.

The embodiment according to Fig. 3 has substantially the same design as described but with the difference that two, independent roller chains are provided on each side of a rib 25 to a detail in the form of a guide 26, which corresponds to the guide 1 in Fig. 1, 2. Of the roller chains, two inner roller chains 27 exhibit pinching of the rollers on the upper portion between surfaces 28 of an upper flange 29 on the guide 26 and an upper surface 30 on a projection 31 of a runner 32, which corresponds to the runner 2 in Fig. 1. The second portion of the roller chains 27 runs along surfaces 33 of the projection 31, but exhibits a play 34 in relation to the opposite surface of the guide 26.

Outer roller chains 35, however, exhibit pinching with a portion, the lower one in Fig. 3, between the surfaces 33 and a surface 36 on the guide 26 and play upward in relation to surface 37 at its second portion, which runs along the surface 30. The play is produced by the flange 29 terminating at the outer edges of the inner roller chains 27.

In Fig. 4 and 5 is shown how the roller chains are constructed of "8"-shaped links 40 with two holes 41 and the said rollers 23. The rollers may consist, as is shown to the left in Fig. 5, of a first part 42 with a bearing roller 43 and a shaft 44. In the assembled chain, on the shaft 44 is attached a second bearing roller 45 with a hole 46 which, with a snap attachment, is adapted to the shaft 44, which is provided with a shoulder, so that the links will have a clearance. The mounting consequently takes place by laying each of two links 40 in an opposite direction surrounding the shaft 44 and thereafter the bearing roller 45 with its hole pressed onto the shaft so that the two bearing rollers will form a common cylinder surface. The free ends of the links 40, held by means of the rollers, are thereafter included in following mounting with rollers and further links so that a chain will be formed. The said embodiment is suitable for production in plastic.

In Fig. 6 an alternative embodiment is shown. In this case each roller uses two similar rollers 48 with a common hole 49 extending through them. The two rollers will be held together at both sides of the links 40 by means of a rivet 50. In Fig. 6 is shown a tube-shaped rivet. After mounting the roller chain should be flexible and the rollers should be rotatable, which means that the links 40 not may be pinched too hard. The said embodiment is also suitable for manufacturing in metal.

As is evident, the rollers of the roller chain are symmetrically divided in parts on both sides of the links. Using this arrangement, simple construction with a single row of links and simple mounting are obtained. Furthermore, the rollers, not the links, will work as carriers against surrounding surfaces, which results in smooth running with low friction, especially as the rollers, but not the links, can be made in plastic.

The guiding shoe according to Fig. 7 comprises two runners of the type described above. In the figure the guide, which also here is "I"-shaped, is indicated with 52 and it exhibits a lower flange 53 and an upper flange 54, which form the rolling surfaces 55 and 56 of the linear bearing. The guide 52 is attached in the intended place with the upper flange 54 free, facing outwards.

Along the guide 52 two runners 57 and 58 can move. These runners are each provided with a middle portion 59, which is made as a casing in the shape of an inverted "U" the downwardly by opening portion of which encloses the guide 52, while its upper, closed portion is equipped with two grooves 60 into which a U-shaped link 61 is attached so as to be able to articulate by means of a continuous pin 62. The inner surfaces of the lower portion of the middle portion 59 are situated at such a distance that they can be brought over the flange 54, but in front of the rib 63 of the guide are two projections 64, projecting from either side and within the flanges 53, 54. These projections 64 form roller surfaces 65 and 66 of the type described above for a roller chain 67 for each projection. By cooperation between the flanges 53 and 54, the projection 64 and the roller chains 67, the runners 57, 58 are attached to the guide 52 and can be slid back and forth on it during rolling of the rolling chains.

From the figure it is also evident that the runners 57 and 58, besides their middle portions 59, are provided with endpieces 68. These can be screwed onto the middle portion or can be equipped with flanges (not shown) which, by friction, are situated in the groove of the middle portion which extends through it so that the endpieces will be attached in that way. The endpieces 68 are open at their lower edges in order to enclose the guide 52, but are closed in the areas over the guide, so that the inside of the runner is partly protected from the environment.

As is evident the endpieces of the runner 57 are so deep, that they allow the roller chain to be positioned within the contour of the runner in spite of the projection 64 having the same length as the middle part 59. This means that the middle part 59 can simply be cut from a profile and the only further shaping which is necessary if a prefabricated, extruded profile in metal or plastic is used, is cutting of the grooves 60. A hole or a groove for the pin 62 can also be made during the extrusion. However, such straight cutting means that the roller chains will extend outside of the middle portion but they can accordingly be enclosed in said endpieces of the illustrated embodiment. The endpieces can be manufactured by moulding in plastic without any further shaping being necessary. In this way a very rational production of the runners is obtained.

In order for the roller chain 67 not to ride on the straight-cut ends of the projection 64, formed by cutting the middle portion 59 from the profile, the roller chains is made so long that it, by being pressed between the roller surfaces 55 and 56 of the guide 52, will project beyond the ends of the projections 64 and will leave a play, as is evident from the figure. With this arrangement it is not necessary to round the ends of the projections as is shown in Fig. 2. Of course, it is, however, advisable to bevel the edges somewhat so that they are not too sharp. The relatively large depth of the endpieces 68 is consequently necessary in order to enclose the projecting folded portions of the roller chains.

As is further evident, both of the runners 57, 58 are connected with play by means of a connecting piece 72, which is made "U"-shaped and is brought over the links 61 and attached to them by means of two rivets 69. By means of three further rivets 70 three line fasteners 71 are attached to the connecting piece 77.

If the runner 2 is moved along the guide 1 in the load direction indicated in Fig. 1 and 2, that is, with the runner 2 pulled outwards from the guide 1, the roller, when moved, will rotate between the surfaces 9 and 18 so that rolling friction will be obtained. The play at the surfaces 8 and 17 allows the other part of the roller chain to move freely in the opposite direction when the roller chain moves by rolling along the path formed by the surfaces 17-19, around the projection 15.

When pressed inwards towards the guide 1, the lower part of the roller chain of the runner 2 will instead be squeezed between the surfaces 8 and 17 while the upper portion will have clearance between the surfaces 9 and 18.

If the runner 2, however, is subjected to such forces that it is askew so that the surface 9 is pressed downwards towards the surface 18 at the one end of the projection 16, while the surface 8 is pressed towards the surface 17 at the other end of the projection, the roller chain will be squeezed at both its portions and at each end of the projection 16. In this position the two portions will be influenced to move in the same direction, although they must move in opposite directions if rotation of the roller chain around the projection 16 is to be obtained. The roller chains will consequently be locked and free operation of the roller is lost.

If the risk of a skewed load of the said type is present in some situation, a bearing according to the embodiment in Fig. 3 can be used. When pressed upwards from the guide 26 of the runner 32, the two lower roller chains 27 will always be under load, whereas pressure downwards will always load the upper roller chains 35. For each of the roller chains, only one portion is loaded on the one side of the projections 31. Any locking of the movement of any of the roller chains due to simultaneous loading against both portions can consequently not occur.

The embodiment shown in Fig. 7, relating to the complete guiding shoe, is suitable as a slide in a main sheet traveller. As the runners 57, 58 are short and connected to each other in an articulated way by means of the connection piece 72 the guide 52 can be curved and adapted to the swing path of a main sail boom. However, other embodiments can also be chosen whereby a connecting piece can have other forms that the one shown. It is also possible to use unconnected runners and they can thereby be used for example as mast track slides according to what is mentioned below.

A further example of the use of the guiding shoe and the bearing according to the invention is consequently as mast track slide, which originally was done using rings encircling the mast but which later on was made in the form of slides intended to move in a guide on the mast manufactured from an extruded profile. Thereby the guide can be made as a part of the mast and it can be made by means of extrusion. The mast track slides correspond to the guiding shoe. If the mast is bent in a gentle curve this will not necessary affect the functioning of the bearing.

The bearing can geometrically be made in other ways than those shown. Consequently the projections around which the roller chains extend may be at an oblique angle for simultaneously receiving forces in all directions. In the presence of large side loads projections may be alternatively provided in two mutually perpendicular directions, so that side loads will also be borne by roller chains.

It has been established that a suitable combination of materials is achieved by making the guide and the runners in extruded light metal or plastic profiles, so that only minor material cutting will be necessary. The roller chains can in an advantageous way be made with rollers of hard plastic with the links stamped from sheet metal. For an embodiment of this kind lubrication is not necessary.

## Claims

1. Sliding shoe arrangement provided with a linear bearing including:

a guide (1; 26; 52) extending in a longitudinal direction;

a runner (2; 32; 58) with two inwardly extending projections (15, 16; 31; 64), each exhibiting an upper rolling surface (18; 30; 65) and a lower rolling surface (17; 33; 66), with end portions extending between and connecting the upper rolling surface and the lower rolling surface of each inwardly extending projection;

at least two roller chains (22; 27, 35; 67), each extending as a continuous loop around a respective one of the inwardly extending projections;

the guide being provided with an upwardly facing bearing surface (8; 36; 55) generally parallel to and opposite the lower rolling surface of each inwardly extending projection, and a downwardly facing bearing surface (9; 28; 56) generally parallel to and opposite the upper rolling surface of each inwardly extending projection; whereby,

each of the roller chains rotates as a loop about its respective inwardly extending projection when the runner is moved along the guide in the longitudinal direction, characterized in that

the guide (1; 26; 52) includes a lower flange (5; 53) and a rib (21; 25; 63), which extends upwards from the lower flange (5; 53);

the runner (2; 32; 58) is formed from a section of a profile and has generally the shape of an inverted "U", with an upper crosspiece (12) and downwardly extending flanges (13, 14);

the inwardly extending projections (15, 16; 31; 64) extend from lower ends of the downwardly extending flanges toward and generally perpendicular to the rib on either side of it and generally parallel to the lower flange of the guide (1; 26; 52);

the end portions are generally planar.

2. Sliding shoe arrangement according to claim 1, characterized in that the profile from which the runner is formed is straight cut, with a middle portion (59) and, provided at each end of the middle portion, end pieces (68) which enclose the end portions of the inwardly extending projections (64) and the roller chains.

3. Sliding shoe arrangement according to claim 1 or 2 in which the guide (52) is curved, characterized in that it comprises several runners (57, 58) which are connected with each other in an articulated manner by means of connecting members (72).

4. Sliding shoe arrangement according to any of the preceding claims, characterized in that

the guide (1; 26; 52) has generally the shape of an "I", the rib (21; 25; 63) connecting said lower flange (5; 53) with an upper flange (12; 54), which is generally parallel to the lower flange;

the upwardly facing bearing surface of the guide is located on the lower flange and the downwardly facing bearing surface of the guide is located on the upper flange;

each roller chain includes an inner roller chain (27) and an outer roller chain (35);

each inwardly extending projection carries its respective inner and outer roller chains side by side as a roller chain pair;

one roller chain of each roller chain pair is positioned so as to bear against and roll on the upwardly facing bearing surface of the rail, whereas the other roller chain of each roller chain pair is positioned so as to bear against and roll on the downwardly facing bearing surface of the guide.

## Patentansprüche

1. Gleitschuheinrichtung, die mit eine lineare Lagervorrichtung versehen ist, bestehend aus:

eine Laufbahn (1; 6; 52), die sich in eine Längsrichtung verlängert;

einen Läufer (2; 32; 58) mit zwei nach innen vorspringenden Teile (15, 16; 31; 64), wobei jeden Teil eine übere Rollfläche (18; 30; 65) u.z.w. eine untere Rollfläche (17; 33; 66) aufweist, mit Endteile die sich zwischen die übere Rollfläche und die untere Rollfläche erstreckt und diese beiden Flächen verbindet, bei jedem nach innen vorspringenden Teil;

zumindest zwei Rollketten (22; 27, 35; 67), wobei jede Kette sich wie eine kontinuerliche Schleife rund herum der zuhörende nach innen vorspringenden Teil erstreckt;

wobei Laufbahn mit einer nach oben gerichteten Lagerfläche (8; 36; 55) versehen ist, die im wesentlischen parallel zu und gegenüberstehend zu der unteren Lagerfläche des nach innen vorspringenden Teils ist, und eine nach unten gerichtete Lagerfläche (9; 28; 56), die im wesentlichen parallel zu und gegenüberstehend zu der übere Rollfläche des nach innen vorspringenden Teils ist;

wobei jede Rollkette wie eine Schleife rund herum den zuhörenden nach innen vorspringenden Teil rotiert, wenn der Läufer längs den Laufbahn in eine Längsrichtung bewegt wird, dadurch gekennzeichnet,

dass die Laufbahn (1; 26; 52) eine untere Flansche (53) und einen Steg (7; 25; 63) aufweist, der sich von der unteren Flansche nach oben erstreckt;

dass der Läufe (2; 32; 58) aus eine Profilsektion geformt ist und im wesentlichen die Form eines umgekehrten "U" hat, mit einen oberen Querteil (12) und nach unten vorspringenden Flanschen (13, 14);

dass die nach innen vorspringenden Teile (15, 16; 31; 64) von dem unteren Bereich der nach unten vorspringenden Flanschen vorspringen, im wesentlichen winkelrecht zu und in Richtung gegen den Steg, auf jeder Zeite des Steges, und im wesentlichen parallel zu die untere Flansche dess Laufbahns (1; 26; 52);

dass die Endteile im wesentlichen plan sind.

2. Gleitschuheinrichtung nach Anspruch 1, dadurch gekennzeichnet, dass das Profil, das den Läufen formt, gerade zerschnitten ist, mit einem mittleren Teil (59), der an jedem Ende mit je einem Endteil (68) versehen ist, die die Endteile der nach innen vorspringenden Teile (64) und die Rollketten einschliessen.

3. Gleitschuheinrichtung nach Anspruch 1 oder 2, wobei die Laufbahn krumm ist, dadurch gekennzeichnet, dass sie mehrerer Läufer (57, 58) umfasst, die mittels verbindenden Teile (72) mit einander gelenkartig verbundend sind.

4. Gleitschuheinrichtung nach einem der früheren Patentansprüche, dadurch gekennzeichnet,

dass der Läufe (1; 26; 52) im wesentlichen die Form eines "I" hat, und dass der Steg (21; 25; 63) die untere Flansche (5; 53) mit einer überen Flansche (12; 54) verbindet, die im wesentlichen parallel zu die untere Flansche ist;

dass die nach oben gerichtete Lagerfläche der Laufbahn sich an der unteren Flansche befindet und die nach unten gerichtete Lagerfläsche der Laufbahn sich an der überen Flansche befindet;

dass jede Rollkette eine innere Rollkette (27) und eine äussere Rollkette (35) aufweist;

dass jeder nach innen vorspringende Teil eine innere und eine äussere Rollkette trägt, neben einander wie ein Rollenkettenpaar;

dass eine Rollkette jedes Rollkettenpaars derartig angebracht ist, dass sie sich auf der nach oben gerichtete Lagerfläche des Laufbahns abstützt und auf diese Rollt, während der andere Rollenkette jedes Rollenkättenpaars, derartig angebracht ist, dass sie sich auf den nach unten gerichtete Lagerfläsche der Laufbahn abstützt und auf diese rollt.

**Revendications**

1. Glissière munie d'un système de roulement linéaire comprenant:

un guide ou rail (1; 26; 52) s'étendant suivant une direction longitudinale;

une pièce mobile ou patin (2; 32; 58) possédant deux saillies (15, 16; 31; 64) dirigées vers l'intérieur et présentant chacune un chemin de roulement superieur (18; 30; 64) et un chemin de roulement inférieur (17; 33; 66) et une extrémité s'étendant entre les deux chemins de roulement en les reliant;

au moins deux chaînes à rouleaux (22; 27, 35; 67) formant chacune une boucle continue autour d'une saillie dirigée vers l'intérieur;

le rail étant pourvu d'une portée (8; 36; 55) orientée vers le haut, qui est généralement parallèle et opposée au chemin de roulement inférieur de chaque saillie dirigée vers l'intérieur, ainsi que d'une portée (9; 28; 56) orientée vers le bas, laquelle est généralement parallèle et opposée au chemin de roulement supérieure de chaque saillie, l'agencement étant tel que:

chacune des chaînes à rouleaux circule sous forme d'une boucle autour de la saillie associée lorsque le patin est déplacé le long du rail dans la direction longitudinale, caractérisée en ce que le rail (1; 26; 52) possède une semelle (5; 53) située en bas et une nervure (21; 25; 63) qui s'étend vers le haut à partir de la semelle (5; 53);

le patin (2; 32; 58) est formé d'un tronçon de profilé et possède la forme générale d'un "U" inversé défini par une base (12) orientée transversalement et située en haut ainsi que par des ailes (13, 14) s'étendant vers le bas;

les saillies (15, 16; 31; 64) sont dirigées vers l'intérieur à partir des extrémités inférieures des ailes, vers la nervure du rail et à peu près perpendiculairement à cette nervure, les saillies étant situées de part et d'autre de celle-ci, et étant sensiblement parallèles à la semelle (1; 26; 52) du rail;

les extrémités des saillies sont sensiblement planes.

2. Glissière selon la revendication 1, caractérisée en ce que le profilé d'au est formé le patin est coupé droit, le patin comprenant une partie centrale (59) et, à chaque extrémité de celle-ci, un embout (68) qui recouvre les extrémités des saillies (64) et des chaînes à rouleaux.

3. Glissière selon la revendication 1 ou 2 et dans laquelle le rail (52) est courbe, caractérisée en ce qu'elle comprend plusieurs patins (57, 58) qui sont reliés l'un à l'autre de façon articulée par des organes d'accouplement (72).

4. Glissière selon l'une quelconque des revendications précédentes, caractérisée en ce que le rail (1; 26; 52) a la forme générale d'un "I", la nervure (21; 25; 63) reliant la semelle inférieure (5; 53) à une semelle supérieure (12; 4) qui est sensiblement parallèle à la semelle inférieure;

la portée du rail orientée vers le haut est située sur la semelle inférieure et la portée orientée vers la bas et située sur la semelle supérieure;

chaque chaîne à rouleaux est formée d'une chaîne à rouleaux interne (27) et d'une chaîne à rouleaux externe (35);

chaque saillie dirigée vers l'intérieur porte ses chaînes interne et externe respectives côte à côte comme une paire de chaînes à rouleaux;

une chaîne de chaque paire de chaînes à rouleaux est disposée pour porter et rouler sur la portée orientée vers le haut du rail, tandis que l'autre chaîne de la paire est disposée pour porter et rouler sur la portée orientée vers la bas.

EP 0 189 413 B1

_FIG.1_

_FIG.2_

1

32  35  37  28  27  29

30
31
33
36

21

34  25  26

*FIG.3*

23  40

41

*FIG.4*

43  42

44  46  45

*FIG.5*

49  50  48  40

48

*FIG.6*

_FIG.7_

EP 0 189 413 B1